# EUROPÄISCHE PATENTSCHRIFT

(11) **EP 2 956 976 B1**
(45) Veröffentlichungstag und Bekanntmachung des Hinweises auf die Patenterteilung: **06.09.2017**
(21) Anmeldenummer: 14702818.7
(22) Anmeldetag: 03.02.2014
(51) Int. Cl.: H01M 2/20, B23K 26/32, B23K 26/323, B23K 26/244, B23K 101/36, B23K 103/10, B23K 103/12, B23K 103/18, B23K 103/00

(54) **ZELLVERBINDER ZUM ELEKTRISCH LEITFÄHIGEN KONTAKTIEREN EINER MEHRZAHL VON BATTERIEZELLTERMINALS, VERFAHREN ZUM HERSTELLEN EINES SOLCHEN ZELLVERBINDERS UND BATTERIEMODUL MIT WENIGSTENS EINEM SOLCHEN ZELLVERBINDER**
CELL CONNECTOR FOR MAKING ELECTRICALLY CONDUCTIVE CONTACT WITH A PLURALITY OF BATTERY CELL TERMINALS, METHOD FOR PRODUCING A CELL CONNECTOR OF THIS KIND, AND BATTERY MODULE HAVING AT LEAST ONE CELL CONNECTOR OF THIS KIND
ÉLÉMENT DE CONNEXION D'ÉLÉMENTS SERVANT À RELIER DE MANIÈRE ÉLECTRIQUEMENT CONDUCTRICE UNE PLURALITÉ DE BORNES D'ÉLÉMENTS DE BATTERIE, PROCÉDÉ DE FABRICATION D'UN TEL ÉLÉMENT DE CONNEXION D'ÉLÉMENTS ET BLOC BATTERIE COMPRENANT AU MOINS UN TEL ÉLÉMENT DE CONNEXION D'ÉLÉMENTS

(30) Priorität: 12.02.2013 DE 102013202244
(43) Veröffentlichungstag der Anmeldung: 23.12.2015
(73) Patentinhaber: Robert Bosch GmbH, 70442 Stuttgart (DE); Samsung SDI Co., Ltd., Yongin-si Gyeonggi-do 446-577 (KR)
(72) Erfinder: FINK, Holger, 70567 Stuttgart (DE)
(74) Vertreter: Bee, Joachim
(86) Internationale Anmeldenummer: PCT/EP2014/051984
(87) Internationale Veröffentlichungsnummer: WO 2014/124825

(56) Entgegenhaltungen:
- DE-A1- 10 122 682
- DE-A1-102009 035 470

## Beschreibung

Die Erfindung betrifft einen Zellverbinder zum elektrisch leitfähigen Kontaktieren einer Mehrzahl von Batteriezellterminals, wobei der Zellverbinder mehrere aneinander angeordnete Abschnitte aufweist und eine erste Anzahl von ersten Abschnitten aus einem elektrisch leitfähigen metallischen Werkstoff ist.

Darüber hinaus betrifft die Erfindung ein Verfahren zum Herstellen eines mehrere aneinander angeordnete Abschnitte aufweisenden Zellverbinders, wobei eine erste Anzahl von ersten Abschnitten aus einem elektrisch leitfähigen metallischen Werkstoff ist.

Ferner betrifft die Erfindung ein Batteriemodul mit einer Mehrzahl von elektrisch miteinander verschalteten Batteriezellen, wobei die Batteriezellen jeweils wenigstens ein mit einer Elektrode der Batteriezelle elektrisch leitend verbundenes Zellterminal zum elektrisch leitfähigen Kontaktieren der Batteriezellen aufweisen und wobei zumindest eine erste Anzahl von Zellterminals mittels eines Zellverbinders verbunden ist.

### Stand der Technik

Batteriemodule, wie insbesondere als Energiespeicher für den Antrieb von Hybrid-, Plug-In-Hybrid- oder Elektrofahrzeugen ausgebildete Batteriemodule, umfassen üblicherweise mehrere Batteriezellen, wobei die Batteriezellen jeweils eine negative Elektrode und eine positive Elektrode aufweisen. Zur elektrisch leitenden Kontaktierung der Batteriezellen weisen diese üblicherweise ein erstes Zellterminal auf, welches mit der negativen Elektrode einer Batteriezelle elektrisch leitend verbunden ist, und ein zweites Zellterminal, welches mit der positiven Elektrode einer Batteriezelle elektrisch leitend verbunden ist. Mittels sogenannter Zellverbinder, welche als Kontaktierungselement dienen, werden die Batteriezellen über die Zellterminals miteinander zu einem Batteriemodul elektrisch verschaltet.

Zur Verschaltung der Batteriezellen beziehungsweise der Batteriemodule sind unterschiedliche Verbindungsarten bekannt. Insbesondere können die Zellverbinder und die Zellterminals derart ausgestaltet sein, dass diese miteinander verschraubt werden können, oder dass die Zellverbinder auf die Zellterminals aufgeschraubt werden können. Alternativ zum Verschrauben kann eine elektrisch leitfähige Verbindung von Batteriezellen durch ein Verschweißen von Zellverbindern mit den Zellterminals der Batteriezellen hergestellt werden. Eine Schweißverbindung weist vorteilhafterweise gegenüber einem Verschrauben üblicherweise einen niedrigeren elektrischen Kontaktübergangswiderstand auf und ermöglicht eine dauerhaft stabile Verbindung von Zellverbinder und Zellterminal. Insbesondere zum elektrisch leitfähigen Verbinden von Zellterminals von prismatischen Batteriezellen werden in der Regel Metallstreifen als Zellverbinder eingesetzt, wobei mittels eines solchen Zellverbinders üblicherweise zwei benachbarte Zellterminals verbunden werden.

Aus der Druckschrift DE 10 2010 030 809 A1 sind beispielsweise Zellverbinder bekannt, mit denen eine elektrisch leitfähige Verbindung zwischen Batteriezellterminals hergestellt werden kann. Die Zellverbinder umfassen dabei wenigstens zwei Verbindungsabschnitte aus unterschiedlichen elektrisch leitfähigen metallischen Werkstoffen. Insbesondere ist vorgesehen, dass ein Verbindungsabschnitt aus Kupfer und ein Verbindungsabschnitt aus Aluminium ist.

Ferner ist aus der Druckschrift DE 10 2010 043 885 A1 bekannt, Gruppen von Batteriezellen mittels mehrerer Zellverbinderflachleiter zu verbinden, wobei ein Zellverbindungsflachleiter mehr als zwei Zellterminals von Batteriezellen miteinander verbindet.

Die Druckschrift DE 101 22 682 A2 offenbart eine Zellenmodulstruktur mit zylindrischen Zellen, die über ein Anschlussverbindungsteil mit einer Busstangenplatte miteinander verbunden sind.

Die Druckschrift DE 10 2009 035 470 A1 offenbart eine Batterie mit einer in einem Batteriegehäuse angeordneten Wärmeleitplatte (4) zum Temperieren der Batterie, wobei mehrere mittels Zellverbinder (3) elektrisch parallel und/oder seriell miteinander verschaltete Einzelzellen (1) Wärme leitend mit der Wärmeleitplatte (4) verbunden sind, wobei Isolationselemente (8) zwischen der Wärmeleitplatte (4) und den Einzelzellen (1) angeordnet sind, die elektrische
Polkontakte (P1, P2) der Einzelzellen (1) mantelförmig umgeben. Die Höhe der Isolationselemente (8) ist im nicht montierten Zustand der Einzelzellen (1) größer als die Höhe der Polkontakte (P1, P2), so dass die Isolationselemente (8) die Polkontakte (P1, P2) überragen.

Nachteilig bei den bislang bekannten Zellverbindern ist, dass diese eine Gruppe von Batteriezellterminals elektrisch leitfähig miteinander verbinden, sodass jedes Zellterminal dieser Gruppe mit jedem weiteren Zellterminal dieser Gruppe elektrisch leitfähig verbunden ist. Daher ist bei einem elektrischen Verschalten von Batteriezellen zu einem Batteriemodul üblicherweise eine Vielzahl von Zellverbindern erforderlich, da in der Regel nicht sämtliche Zellterminals eines Batteriemoduls elektrisch leitend miteinander kontaktiert sein dürfen. Die Verwendung einer Vielzahl von Zellverbindern läuft dem Bestreben zuwider, die Anzahl von Komponenten, insbesondere zur Vereinfachung der Handhabung, zu reduzieren.

Vor diesem Hintergrund ist es eine Aufgabe der Erfindung, einen Zellverbinder bereitzustellen, welcher die Anzahl von für eine elektrische Verschaltung von Batteriezellen, insbesondere von prismatischen Batteriezellen, erforderlichen Zellverbindern reduziert, vorteilhafterweise derart, dass ein einziger, vorzugsweise einteilig ausgebildeter Zellverbinder zum elektrischen Verschalten einer Mehrzahl von Batteriezellen ausreichend ist.

### Offenbarung der Erfindung

Zur Lösung der Aufgabe wird ein Zellverbinder zum elektrisch leitfähigen Kontaktieren einer Mehrzahl von Batteriezellterminals, wobei der Zellverbinder mehrere aneinander angeordnete Abschnitte aufweist und eine erste Anzahl von ersten Abschnitten aus einem elektrisch leitfähigen metallischen Werkstoff ist, vorgeschlagen, wobei eine zweite Anzahl von zweiten Abschnitten aus einem elektrisch isolierenden Kunststoff ist und wenigstens ein zweiter Abschnitt jeweils zwischen wenigstens zwei ersten Abschnitten angeordnet ist. Vorteilhafterweise ist mittels eines solchen Zellverbinders eine elektrische Verschaltung mehrerer Batteriezellen zu einem Batteriemodul vereinfacht, insbesondere da nicht eine Vielzahl einzelner Zellverbinder, welche jeweils nur zwei Batteriezellterminals verbinden, mit den Zellterminals von zu verschaltenden Batteriezellen zu kontaktieren sind. Stattdessen sind lediglich wenige erfindungsgemäße Zellverbinder erforderlich. Insbesondere kann der erfindungsgemäße Zellverbinder aufgrund der elektrisch isolierend wirkenden Abschnitte auch derart ausgestaltet werden, dass nur ein einzelner erfindungsgemäßer Zellverbinder mit den Batteriezellterminals eines Batteriemoduls zu verbinden ist, um Batteriezellen zu einem Batteriemodul elektrisch miteinander zu verschalten.

Ein Zellverbinder ist vorzugsweise derart ausgebildet, dass dieser mittels eines Laserschweißverfahrens mit den Zellterminals von elektrisch miteinander zu verschaltenden Batteriezellen verbunden werden kann. Die konkrete Ausgestaltung des Zellverbinders, d.h. insbesondere die Anordnung von elektrisch leitenden und elektrisch nichtleitenden Abschnitten zueinander wird vorteilhafterweise durch die Art und Weise bestimmt, wie Batteriezellen zu einem Batteriemodul elektrisch zu verschalten sind. Das Verschalten der Batteriezellen miteinander zu einem Batteriemodul ist dabei vorteilhafterweise mittels erfindungsgemäßer Zellverbinder weniger fehleranfällig, da durch den Zellverbinder als solchen bereits vorgegeben ist, wie die Batteriezellen miteinander verschaltet werden. Somit wird insbesondere vermieden, dass versehentlich falsche Zellterminals mit Zellverbindern kontaktiert werden oder dass Zellterminals versehentlich nicht mit Zellverbindern kontaktiert werden.

Die erfindungsgemäße Ausgestaltung der Erfindung sieht vor, dass der wenigstens eine zweite Abschnitt jeweils mittels eines Nano-Molding-Verfahrens mit den wenigstens zwei ersten Abschnitten verbunden ist. Ein Nano-Molding-Verfahren ist insbesondere ein Spritzgießverfahren, bei dem durch chemische Vorbehandlung eines Metalls, beispielsweise einer Aluminiumlegierung, Hohlräume im Nanometerbereich entstehen. Auf das so vorbehandelte Metall wird ein Kunststoff angespritzt, welcher mit dem Metall besonders fest verbunden wird. Die elektrisch isolierenden Abschnitte sowie die elektrisch leitfähigen Abschnitte des erfindungsgemäßen Zellverbinders können somit vorteilhafterweise besonders flach und materialsparend hergestellt werden.

Gemäß einer bevorzugten Ausgestaltung der Erfindung ist wenigstens ein erster Abschnitt aus einem ersten metallischen Werkstoff und wenigstens ein weiterer erster Abschnitt aus einem zweiten metallischen Werkstoff. Der erste metallische Werkstoff ist dabei vorzugsweise Kupfer. Der zweite metallische Werkstoff ist vorzugsweise Aluminium. Der Werkstoff eines elektrisch leitfähigen Abschnitts eines erfindungsgemäßen Zellverbinders entspricht vorteilhafterweise dem Werkstoff des Batteriezellterminals, mit dem der jeweilige elektrisch leitfähige Abschnitt des Zellverbinders kontaktiert wird.

Vorteilhafterweise ist der wenigstens eine erste Abschnitt mit dem wenigstens einen weiteren ersten Abschnitt mittels eines Durchsetzfügeverfahrens elektrisch leitfähig verbunden. Bevorzugte Durchsetzfügeverfahren sind Toxen oder Clinchen. Ein Verbinden der ersten Abschnitte mittels eines Durchsetzfügeverfahrens ermöglicht dabei eine besonders kostengünstige und eine dauerhaft stabile Verbindung der Abschnitte. Insbesondere sind Durchsetzfügeverfahren und Nano-Molding-Verfahren vorteilhafterweise geeignet, eine Vielzahl von Materialkombinationen miteinander zu verbinden, wobei die Verfahren vorteilhafterweise insbesondere im Vergleich zu Schweiß- oder Lötverfahren wenig Energie für deren Durchführung erfordern.

Gemäß einer weiteren vorteilhaften Ausgestaltung der Erfindung ist der Zellverbinder ebenflächig mit einem im Wesentlichen rechteckigen Querschnitt ausgebildet. Die Länge des Zellverbinders hängt insbesondere von der Anzahl der elektrisch miteinander zu verschaltenden Batteriezellen ab. Die Dicke des Zellverbinders ist vorzugsweise über dessen Länge konstant, vorzugsweise ebenso die Breite des Zellverbinders. Ein elektrisch leitfähiger Abschnitt ist vorteilhafterweise so lang ausgebildet, dass eine Anzahl n von Zellterminals elektrisch leitfähig kontaktiert werden kann. Das heißt, dass ein elektrisch leitfähiger Abschnitt in Abhängigkeit davon, wie Batteriezellen zu einem Batteriemodul zu verschalten sind, lediglich ein Zellterminal elektrisch leitfähig kontaktieren kann oder aber auch zwei, drei, vier oder mehr Zellterminals. Gemäß einer bevorzugten Ausgestaltung der Erfindung ist vorgesehen, dass der Zellverbinder nach Art einer Leiste ausgebildet ist, bei der elektrisch leitfähige Abschnitte und elektrisch isolierende Abschnitte in wechselnder Reihenfolge angeordnet sind, wobei die Reihenfolge der Abschnitte durch die Art der Verschaltung von zu einem Batteriemodul zu verschaltenden Batteriezellen bestimmt ist. Insbesondere ist aber auch vorgesehen, dass der Zellverbinder quasi eine Netzstruktur ausbildet. Zur Kontaktierung mehrerer Reihen von Zellterminals weist ein Zellverbinder hierbei entsprechende leistenartig aneinander angeordnete Reihen von Abschnitten auf, welche über Verbindungsabschnitte, die insbesondere elektrisch nicht leitend ausgebildet sein können, zu einem einzigen Zellverbinder verbunden sind. Die Verbindungsabschnitte des Zellverbinders sind dabei vorzugsweise ebenfalls leistenartig aneinander angeordnet, wobei Reihen von Verbindungsabschnitten vorzugsweise orthogonal zu den vorgenannten leistenartigen Zellverbindern verlaufen.

Ein solcher Zellverbinder ersetzt dabei vorteilhafterweise eine Vielzahl von herkömmlichen Zellverbindern. Hierdurch ist vorteilhafterweise das Verschalten von Batteriezellen zu einem Batteriemodul vereinfacht. Zwischen Zellterminals oder Gruppen von Zellterminals, die elektrisch nicht leitfähig miteinander zu verbinden sind, ist erfindungsgemäß ein elektrisch isolierender Abschnitt angeordnet, sodass keine elektrisch leitfähige Verbindung zwischen diesen Zellterminals besteht.

Zur Lösung der eingangs genannten Aufgabe wird ferner ein Verfahren zum Herstellen eines mehrere aneinander angeordnete Abschnitte aufweisenden Zellverbinders, insbesondere eines erfindungsgemäßen Zellverbinders, vorgeschlagen, wobei eine erste Anzahl von ersten Abschnitten aus einem elektrisch leitfähigen metallischen Werkstoff ist, und zwischen wenigstens zwei erste Abschnitte wenigstens ein zweiter Abschnitt aus einem elektrisch isolierenden Kunststoff angeordnet wird, wobei der wenigstens eine zweite Abschnitt mit den wenigstens zwei ersten Abschnitten mittels eines Nano-Molding-Verfahrens verbunden wird. Vorteilhafterweise sind Nano-Molding-Verfahren energieeffizient. Darüber hinaus sind mittels Nano-Molding-Verfahren vorteilhafterweise Kunststoff-Metall-Verbindungen mit unterschiedlichen metallischen Werkstoffen realisierbar.

Eine vorteilhafte Ausgestaltung des Verfahrens sieht vor, dass wenigstens ein erster Abschnitt aus einem ersten elektrisch leitfähigen metallischen Werkstoff ist und wenigstens ein weiterer erster Abschnitt aus einem zweiten elektrisch leitfähigen metallischen Werkstoff ist, wobei der wenigstens eine erste Abschnitt mit dem wenigstens einen weiteren ersten Abschnitt mittels eines Durchsetzfügeverfahrens verbunden wird. Dabei ist insbesondere Kupfer als erster Werkstoff und Aluminium als zweiter Werkstoff vorgesehen.

Des Weiteren wird zur Lösung der eingangs genannten Aufgabe ein Batteriemodul mit einer Mehrzahl von elektrisch miteinander verschalteten Batteriezellen, wobei die Batteriezellen jeweils wenigstens ein mit einer Elektrode der Batteriezelle elektrisch leitend verbundenes Zellterminal zum elektrisch leitfähigen Kontaktieren der Batteriezellen aufweisen, vorgeschlagen, wobei zumindest eine erste Anzahl von Zellterminals mittels eines erfindungsgemäßen Zellverbinders verbunden ist. Hierdurch sind die Batteriezellen vorteilhafterweise zumindest teilweise mittels des erfindungsgemäßen Zellverbinders elektrisch miteinander verschaltet.

Gemäß einer vorteilhaften Ausgestaltung des Batteriemoduls weisen die Batteriezellen jeweils ein erstes Zellterminal und ein zweites Zellterminal auf, wobei die Batteriezellen derart nebeneinander angeordnet sind, dass zwei parallel zueinander verlaufende Reihen von Zellterminals ausgebildet sind, wobei die erste Reihe von Zellterminals mit einem erfindungsgemäßen Zellverbinder verbunden ist und die zweite Reihe von Terminals mit einem zweiten erfindungsgemäßen Zellverbinder verbunden ist. Hierdurch sind die Batteriezellen vorteilhafterweise mittels des ersten Zellverbinders und des zweiten Zellverbinders elektrisch miteinander verschaltet.

Insbesondere ist vorgesehen, dass der wenigstens eine erfindungsgemäße Zellverbinder, insbesondere der erste erfindungsgemäße Zellverbinder und der zweite erfindungsgemäße Zellverbinder, mittels eines Laserschweißverfahrens mit den Zellterminals der Batteriezellen verbunden ist. Die Zellterminals der Batteriezellen sind dabei vorzugsweise mit einer flachen Oberfläche ausgebildet. Insbesondere ist vorgesehen, dass die Batteriezellen Lithium-Ionen-Zellen sind, vorzugsweise nachladbare Lithium-Ionen-Zellen. Vorzugsweise sind die Batteriezellen als prismatische Zellen ausgebildet. Insbesondere ist vorgesehen, dass die einzelnen Batteriezellen jeweils von einem Zellgehäuse umgeben sind, aus welchem die Zellterminals herausragen. Insbesondere können die Batteriezellen durch entsprechende Anordnung der Batteriezellen mittels der erfindungsgemäßen Zellverbinder zu einer beliebigen XsYp-Konfiguration verschaltet werden. Das heißt, dass eine Anzahl Y von Batteriezellen jeweils elektrisch parallel verschaltet wird, und eine Anzahl X von elektrisch parallel geschalteten Batteriezellen elektrisch in Reihe zu einem Batteriemodul verschaltet werden.

Weitere vorteilhafte Einzelheiten, Merkmale und Ausgestaltungsdetails der Erfindung werden im Zusammenhang mit den in den Figuren dargestellten Ausführungsbeispielen näher erläutert. Dabei zeigt:
- Fig. 1a: in einer schematischen Darstellung eine Draufsicht auf ein Ausführungsbeispiel für ein erfindungsgemäßes Batteriemodul mit erfindungsgemäßen Zellverbindern;
- Fig. 1b: in einer schematischen Darstellung eine Frontansicht des in Fig. 1a dargestellten Ausführungsbeispiels eines Batteriemoduls mit erfindungsgemäßen Zellverbindern; und
- Fig. 2: in einer schematischen Darstellung eine Draufsicht auf ein weiteres Ausführungsbeispiel für ein erfindungsgemäßes Batteriemodul mit erfindungsgemäßen Zellverbindern.

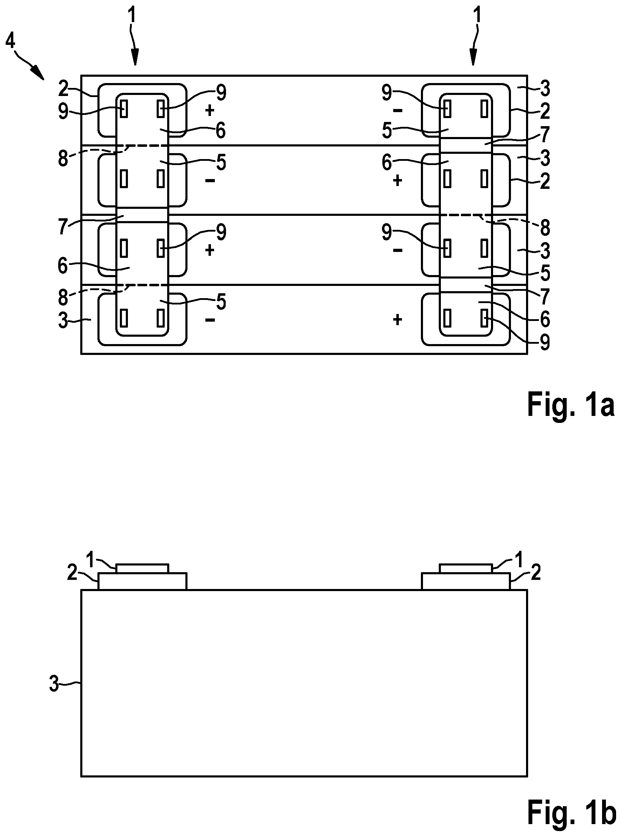

In Fig. 1a sind erfindungsgemäße Zellverbinder 1 mit Batteriezellterminals 2 einer Mehrzahl von Batteriezellen 3 verbunden. Mittels der Zellverbinder 1 sind die Batteriezellen 3 dabei elektrisch miteinander zu einem Batteriemodul 4 verschaltet. Ein Zellverbinder 1 weist dabei jeweils mehrere aneinander angeordnete Abschnitte 5, 6, 7 auf und ist leistenartig ausgebildet. Die Abschnitte 5 und die Abschnitte 6 sind dabei jeweils aus einem elektrisch leitfähigen metallischen Werkstoff. Die Abschnitte 5 sind dabei vorzugsweise aus Kupfer, ebenso wie die Zellterminals 2, die mit den Abschnitten 5 der Zellverbinder 1 verbunden sind. Die Abschnitte 6 sind dabei vorzugsweise aus Aluminium, ebenso wie die Zellterminals 2, die mit den Abschnitten 6 des Zellverbinders 1 verbunden sind. Die gestrichelte Linie 8 stellt symbolisch die Verbindung zwischen zwei elektrisch leitfähig ausgebildeten Abschnitten 5, 6 aus unterschiedlichen metallischen Werkstoffen dar. Die weiteren Abschnitte 7 der Zellverbinder 1 sind aus einem elektrisch isolierenden Kunststoff.

Wie in Fig. 1a dargestellt ist, sind die elektrisch isolierenden Abschnitte 7 jeweils von zwei elektrisch leitfähigen Abschnitten 5, 6 umgeben. Die elektrisch isolierenden Abschnitte 7 der Zellverbinder 1 sind bei dem in Fig. 1a dargestellten Ausführungsbeispiel mittels eines Nano-Molding-Verfahrens mit den elektrisch leitfähigen Abschnitten 5 und 6 verbunden. Die Zellverbinder 1 beziehungsweise die elektrisch leitfähigen Abschnitte 5 und 6 des Zellverbinders 1 sind mittels eines Laserschweißverfahrens mit den Zellterminals 2 der Batteriezellen 3 elektrisch leitfähig kontaktiert. Die Schweißnähte sind dabei in Fig. 1a symbolisch durch die Rechtecke 9 gekennzeichnet.

Das in Fig. 1a beispielhaft dargestellte Batteriemodul 4 weist vier prismatische Batteriezellen 3 auf, welche jeweils ein erstes Zellterminal 2 und ein zweites Zellterminal 2 aufweisen. Ein Zellterminal 2 einer Batteriezelle 3 ist dabei mit der positiven Elektrode der Batteriezelle 3 elektrisch leitend kontaktiert (in Fig. 1a jeweils durch ein "+"-Zeichen symbolisch dargestellt) und das weitere Zellterminal 2 einer Batteriezelle 3 ist mit der negativen Elektrode der Batteriezelle elektrisch leitend kontaktiert (in Fig. 1a jeweils durch ein "-"-zeichnen symbolisch dargestellt). Die Batteriezellen 3 des in Fig. 1a dargestellten Batteriemoduls 4 sind dabei derart nebeneinander angeordnet, dass zwei parallel nebeneinander verlaufende Reihen von Zellterminals ausgebildet sind. Durch die Anordnung der Batteriezellen 3 folgt jeweils auf ein mit der positiven Elektrode einer Batteriezelle 3 verbundenes Zellterminal 2 ein mit der negativen Elektrode einer Batteriezelle 3 verbundenen Zellterminals 2. Die mit der positiven Elektrode einer Batteriezelle 3 leitend verbundenen Zellterminals 2 sind in dem in Fig. 1a dargestellten Ausführungsbeispiel aus Aluminium und die mit der negativen Elektrode verbundenen Zellterminals 2 aus Kupfer.

Der in Fig. 1a links dargestellte Zellverbinder 1 verbindet dabei von oben nach unten betrachtet die Zellterminals 2 der ersten beiden Batteriezellen 3 und die Zellterminals 2 der letzten beiden Batteriezellen 3 elektrisch leitend. Der ein Zellterminal 2 kontaktierende Abschnitt 5, 6 des Zellverbinders 1 ist dabei jeweils aus dem gleichen Werkstoff wie das jeweilige Zellterminal 2. So sind die Abschnitte 6 des Zellverbinders 1 in dem dargestellten Ausführungsbeispiel beispielsweise aus Aluminium und die Abschnitte 5 des Zellverbinders 1 beispielsweise aus Kupfer. Durch den Kunststoffabschnitt 7 sind die oberen Abschnitte 6 und 5 des Zellverbinders 1 gegen die unteren Abschnitte 6 und 5 des Zellverbinders 1 elektrisch gegeneinander isoliert.

Der in Fig. 1a rechts dargestellte Zellverbinder 1 verbindet von oben nach unten betrachtet die Zellterminals 2 der mittleren beiden Batteriezellen 3 elektrisch leitend. Der obere Abschnitt 5 des Zellverbinders 1 ist gegen die mittleren Abschnitte 6 und 5 des Zellverbinders 1 durch einen Kunststoffabschnitt 7 elektrisch isoliert. Ebenso ist der untere Abschnitt 6 des Zellverbinders 1 gegen die mittleren Abschnitte 6 und 5 des Zellverbinders 1 durch einen Kunststoffabschnitt 7 elektrisch isoliert.

In Fig. 1b ist eine Frontansicht des in Fig. 1a gezeigten Batteriemoduls 4 dargestellt. Wie aus den Figuren 1a und Fig. 1b ersichtlich ist, sind die Zellverbinder 1 jeweils im Wesentlichen leistenartig ausgebildet. Die Zellverbinder 1 sind dabei ebenflächig und weisen einen im Wesentlichen rechteckigen Querschnitt auf. Die Dicke sowie die Breite der Zellverbinder 1 ist über deren Länge konstant. In einer Ausgestaltungsvariante können zumindest die Abschnitte 7 der Zellverbinder 1 dünner als die Abschnitte 5 und 6 der Zellverbinder 1 ausgestaltet sein. Das Batteriemodul 4 ist vorliegend in einer sogenannten 4s1p-Konfiguratinon verschaltet. Das heißt, dass die vier einzelnen Batteriezellen 3 elektrisch in Reihe geschaltet sind.

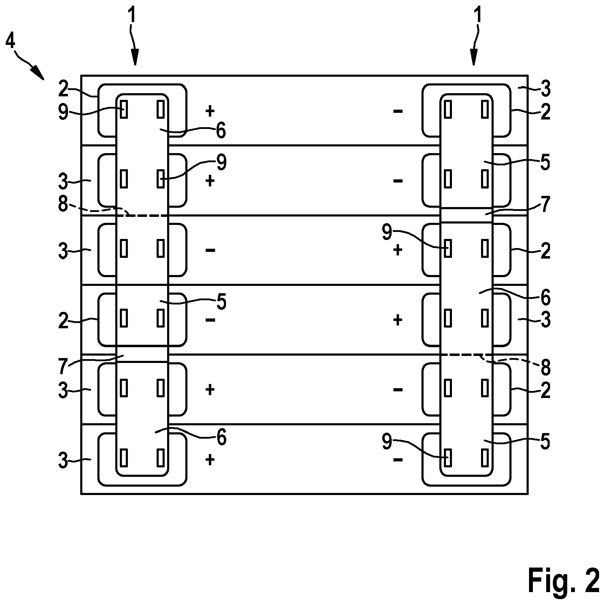

In Fig. 2 ist ein weiteres Ausführungsbeispiel für ein erfindungsgemäßes Batteriemodul 4 dargestellt, wobei die Zellterminals 2 der Batteriezellen 3 des Batteriemoduls 4 zwei parallel zueinander verlaufende Reihen ausbilden, wobei die erste Reihe von Zellterminals (in Fig. 2 links dargestellt) mit einem ersten erfindungsgemäßen Zellverbinder 1 verbunden ist und die zweite Reihe von Zellterminals 2 (in Fig. 2 rechts dargestellt) mit einem zweiten erfindungsgemäßen Zellverbinder 1 verbunden ist.

Die sechs Batteriezellen 3 des in Fig. 2 dargestellten Batteriemoduls 4 sind derart nebeneinander angeordnet, dass jeweils ein erstes Zellterminal 2 von einer ersten Batteriezelle 3 und ein zweites Zellterminal 2 von einer zweiten Batteriezelle 3, wobei das erste Zellterminal 2 und das zweite Zellterminal 2 jeweils eine gleiche Polarität aufweisen, nebeneinander angeordnet sind. Die Polarität der Zellterminals 2 wird dabei in Fig. 2 durch die jeweils neben den Zellterminals stehenden "+"-Zeichen und "-"-Zeichen symbolisch dargestellt. Die Batteriezellen 3 des Batteriemoduls 4 sind dabei mittels der Zellverbinder 1 in einer sogenannten 3s2p-Konfiguration elektrisch miteinander verschaltet. Das heißt, dass jeweils die zwei nebeneinander angeordneten Batteriezellen 3, deren Zellterminal 2 jeweils die gleiche Polarität aufweisen, elektrisch parallel verschaltet sind, wobei die drei Paare von Batteriezellen 3 elektrisch in Reihe geschaltet sind.

Zur Realisierung dieser 3s2p-Konfiguration verbindet der in Fig. 2 links dargestellte Zellverbinder 1 von oben nach unten betrachtet die Zellterminals 2 der vier oberen Batteriezellen 3 und die beiden Zellterminals 2 der beiden unteren Batteriezellen 3 jeweils elektrisch leitend miteinander. Der Abschnitt 7 des Zellverbinders 1, welcher aus einem elektrisch isolierenden Kunststoff ist, verhindert dabei, dass sämtliche Zellterminals 2 auf der linken Seite elektrisch leitend miteinander verbunden sind und isoliert das jeweils linke Zellterminal 2 der oberen vier Batteriezellen 3 gegen das jeweils linke Zellterminal 2 der unteren zwei Batteriezellen 3 des Batteriemoduls 4. Der in Fig. 2 rechts dargestellte Zellverbinder 1 verbindet, wiederum von oben nach unten betrachtet, jeweils das rechte Zellterminal 2 der oberen beiden Batteriezellen 3 und darüber hinaus das jeweils rechte Zellterminal 2 der unteren vier Batteriezellen 3 des Batteriemoduls 4. Der elektrisch nicht leitfähige Abschnitt 7 des Zellverbinders 1 verhindert wiederum, dass sämtliche Zellterminals 2 auf der rechten Seite elektrisch leitend miteinander verbunden sind.

Die in Fig. 2 dargestellten Zellverbinder 1 weisen jeweils vier Abschnitte auf. Von oben nach unten betrachtet weist der in Fig. 2 links dargestellte Zellverbinder 1 einen ersten Abschnitt 6 aus Aluminium auf, welcher mit dem jeweils linken Zellterminal 2 der oberen beiden Batteriezellen 3 des Batteriemoduls 4 elektrisch leitend kontaktiert ist. An diesen ersten Abschnitt 6 des Zellverbinders 1 ist mittels eines Durchsetzfügeverfahrens ein zweiter Abschnitt 5 aus Kupfer angefügt (symbolisch durch die gestrichelt gezeichneten Linien 8 dargestellt), welcher mit dem jeweils linken Zellterminal 2 der mittleren beiden Batteriezellen 3 des Batteriemoduls 4 elektrisch leitend kontaktiert ist. Der erste Abschnitt 5 und der zweite Abschnitt 6 sind dabei elektrisch leitend miteinander verbunden. An den zweiten Abschnitt 5 des Zellverbinders 1 ist mittels eines Nano-Molding-Verfahrens ein elektrisch isolierend wirkender Abschnitt 7 aus Kunststoff angefügt. An diesen Abschnitt 7 des Zellverbinders 1 ist wiederum mittels eines Nano-Molding-Verfahrens ein elektrisch leitender Abschnitt 6 aus Aluminium angefügt, welcher das jeweils linke Zellterminal 2 der unteren beiden Batteriezellen 3 des Batteriemoduls 4 elektrisch leitend kontaktiert.

Der in Fig. 2 rechts dargestellte Zellverbinder 1 weist, von oben nach unten betrachtet, einen elektrisch leitfähigen Abschnitt 5 aus Kupfer auf, daran angeordnet einen elektrisch nicht leitenden Abschnitt 7 aus Kunststoff, daran angeordnet einen elektrisch leitenden Abschnitt 6 aus Aluminium und an diesen mittels eines Durchsetzfügeverfahrens, beispielsweise mittels Clinchen, angeordneten Abschnitt 5 aus Kupfer auf.

Gemäß einer vorteilhaften in den Figuren nicht dargestellten Ausgestaltungsvariante sind die Zellverbinder 1 über wenigstens einen, vorzugsweise elektrisch nicht leitfähigen Verbindungsabschnitt miteinander zu einem einzigen Zellverbinder verbunden. Der wenigstens eine Verbindungsabschnitt ist dabei vorzugsweise aus Kunststoff und vorzugsweise mittels eines Nano-Molding-Verfahrens zwischen zwei elektrisch leitfähigen Abschnitten angeordnet.

Die in den Figuren dargestellten und im Zusammenhang mit diesen erläuterten Ausführungsbeispiele dienen der Erläuterung der Erfindung und sind für diese nicht beschränkend.

## Patentansprüche

1. Zellverbinder (1) zum elektrisch leitfähigen Kontaktieren einer Mehrzahl von Batteriezellterminals (2), wobei der Zellverbinder (1) mehrere aneinander angeordnete Abschnitte (5, 6, 7) aufweist und eine erste Anzahl von ersten Abschnitten (5, 6) aus einem elektrisch leitfähigen metallischen Werkstoff ist, wobei eine zweite Anzahl von zweiten Abschnitten (7) aus einem elektrisch isolierenden Kunststoff ist, wobei wenigstens ein zweiter Abschnitt (7) jeweils zwischen wenigstens zwei ersten Abschnitten (5, 6) angeordnet ist, **dadurch gekennzeichnet, dass** der wenigstens eine zweite Abschnitt (7) jeweils mittels eines Nano-Molding-Verfahrens mit den wenigstens zwei ersten Abschnitten (5, 6) verbunden ist.

2. Zellverbinder (1) zum elektrisch leitfähigen Kontaktieren einer Mehrzahl von Batteriezellterminals (2), wobei der Zellverbinder (1) mehrere aneinander angeordnete Abschnitte (5, 6, 7) aufweist und eine erste Anzahl von ersten Abschnitten (5, 6) aus einem elektrisch leitfähigen metallischen Werkstoff ist, wobei eine zweite Anzahl von zweiten Abschnitten (7) aus einem elektrisch isolierenden Kunststoff ist, wobei wenigstens ein zweiter Abschnitt (7) jeweils zwischen wenigstens zwei ersten Abschnitten (5, 6) angeordnet ist, **dadurch gekennzeichnet, dass** der Zellverbinder (1) ebenflächig mit einem im Wesentlichen rechteckigen Querschnitt ausgebildet ist.

3. Zellverbinder (1) nach einem der vorhergehenden Ansprüche, **dadurch gekennzeichnet, dass** wenigstens ein erster Abschnitt (5) aus einem ersten metallischen Werkstoff ist und wenigstens ein weiterer erster Abschnitt (6) aus einem zweiten metallischen Werkstoff ist.

4. Zellverbinder (1) nach Anspruch 3, **dadurch gekennzeichnet, dass** der wenigstens eine erste Abschnitt (5) mit dem wenigstens einen weiteren ersten Abschnitt (6) mittels eines Durchsetzfügeverfahrens elektrisch leitfähig verbunden ist.

5. Verfahren zum Herstellen eines mehrere aneinander angeordnete Abschnitte (5, 6, 7) aufweisenden Zellverbinders (1), wobei eine erste Anzahl von ersten Abschnitten (5, 6) aus einem elektrisch leitfähigen metallischen Werkstoff ist, **dadurch gekennzeichnet, dass** zwischen wenigstens zwei erste Abschnitte (5, 6) wenigstens ein zweiter Abschnitt (7) aus einem elektrisch isolierenden Kunststoff angeordnet wird, wobei der wenigstens eine zweite Abschnitt (7) mit den wenigstens zwei ersten Abschnitten (5, 6) mittels eines Nano-Molding-Verfahrens verbunden wird.

6. Verfahren nach Anspruch 5, **dadurch gekennzeichnet, dass** wenigstens ein erster Abschnitt (5) aus einem ersten elektrisch leitfähigen metallischen Werkstoff ist und wenigstens ein weiterer erster Abschnitt (6) aus einem zweiten elektrisch leitfähigen metallischen Werkstoff ist, wobei der wenigstens eine erste Abschnitt (5) mit dem wenigstens einen weiteren ersten Abschnitt (6) mittels eines Durchsetzfügeverfahrens verbunden wird.

7. Batteriemodul (4) mit einer Mehrzahl von elektrisch miteinander verschalteten Batteriezellen (3), wobei die Batteriezellen (3) jeweils wenigstens ein mit einer Elektrode der Batteriezelle (3) elektrisch leitend verbundenes Zellterminal (2) zum elektrisch leitfähigen Kontaktieren der Batteriezellen (3) aufweisen und wobei zumindest eine erste Anzahl von Zellterminals (2) mittels eines Zellverbinders (1) verbunden ist, **dadurch gekennzeichnet, dass** zumindest die erste Anzahl von Zellterminals (2) mittels eines Zellverbinders (1) nach einem der Ansprüche 1 bis 4 verbunden ist, sodass die Batteriezellen (3) zumindest teilweise mittels des Zellverbinders (1) elektrisch miteinander verschaltet sind.

8. Batteriemodul (4) nach Anspruch 8, **dadurch gekennzeichnet, dass** die Batteriezellen (3) jeweils ein erstes Zellterminal (2) und ein zweites Zellterminal (2) aufweisen, wobei die Batteriezellen (3) derart nebeneinander angeordnet sind, dass zwei parallel zueinander verlaufende Reihen von Zellterminals ausgebildet sind, wobei die erste Reihe von Zellterminals mit einem ersten Zellverbinder (1) nach einem der Ansprüche 1 bis 5 verbunden ist und die zweite Reihe von Zellterminals mit einem zweiten Zellverbinder (1) nach einem der Ansprüche 1 bis 4 verbunden ist, sodass die Batteriezellen mittels der Zellverbinder elektrisch miteinander verschaltet sind.

## Claims

1. Cell connector (1) for making electrically conductive contact with a plurality of battery cell terminals (2), wherein the cell connector (1) has a plurality of sections (5, 6, 7) arranged next to one another and a first number of first sections (5, 6) is composed of an electrically conductive metal material, wherein a second number of second sections (7) is composed of an electrically insulating plastic, wherein at least one second section (7) is arranged in each case between at least two first sections (5, 6), **characterized in that** the at least one second section (7) is in each case connected by means of a nano-moulding process to the at least two first sections (5, 6).

2. Cell connector (1) for making electrically conductive contact with a plurality of battery cell terminals (2), wherein the cell connector (1) has a plurality of sections (5, 6, 7) arranged next to one another and a first number of first sections (5, 6) is composed of an electrically conductive metal material, wherein a second number of second sections (7) is composed of an electrically insulating plastic, wherein at least one second section (7) is arranged in each case between at least two first sections (5, 6), **characterized in that** the cell connector (1) is designed to be planar with a substantially rectangular cross section.

3. Cell connector (1) according to either of the preceding claims, **characterized in that** at least one first section (5) is composed of a first metal material and at least one further first section (6) is composed of a second metal material.

4. Cell connector (1) according to Claim 3, **characterized in that** the at least one first section (5) is electrically conductively connected to the at least one further first section (6) by means of a clinch-joining process.

5. Method for producing a cell connector (1) having a plurality of sections (5, 6, 7) arranged next to one another, wherein a first number of first sections (5, 6) are composed of an electrically conductive metal material, **characterized in that** at least one second section (7) composed of an electrically insulating plastic is arranged in each case between at least two first sections (5, 6), wherein the at least one second section (7) is connected to the at least two first sections (5, 6) by means of a nano-moulding process.

6. Method according to Claim 5, **characterized in that** at least one first section (5) is composed of a first electrically conductive metal material and at least one further first section (6) is composed of a second electrically conductive metal material, wherein the at least one first section (5) is connected to the at least one further first section (6) by means of a clinch-joining process.

7. Battery module (4) with a plurality of electrically connected battery cells (3), wherein the battery cells (3) have in each case at least one cell terminal (2) which is electrically conductively connected to an electrode of the battery cell (3) for making electrically conductive contact with the battery cell (3) and wherein at least a first number of cell terminals (2) are connected by means of a cell connector (1), **characterized in that** at least the first number of cell terminals (2) are connected to one another by means of a cell connector (1) according to any of Claims 1 to 4, with the result that the battery cells (3) are at least in part electrically connected to one another by means of the cell connector (1).

8. Battery module (4) according to Claim 8, **characterized in that** the battery cells (3) have in each case a first cell terminal (2) and a second cell terminal (2), wherein the battery cells (3) are arranged next to one another such that two rows of cell terminals which run parallel to one another are formed, wherein the first row of cell terminals is connected by a first cell connector (1) according to any of Claims 1 to 5 and the second row of cell terminals is connected by a second cell connector (1) according to any of Claims 1 to 4, with the result that the battery cells are electrically connected to one another by means of the cell connectors.

## Revendications

1. Connecteur de cellule (1) destiné à établir un contact électriquement conducteur avec une pluralité de bornes de cellule de batterie (2), le connecteur de cellule (1) possédant plusieurs portions (5, 6, 7) juxtaposées et un premier nombre de premières portions (5, 6) étant constitué d'un matériau métallique électriquement conducteur, un deuxième nombre de deuxièmes portions (7) étant constitué d'une matière plastique électriquement isolante, au moins une deuxième portion (7) étant respectivement disposée entre au moins deux premières portions (5, 6), **caractérisé en ce que** l'au moins une deuxième portion (7) est respectivement reliée aux au moins deux premières portions (5, 6) au moyen d'un procédé de nanomoulage.

2. Connecteur de cellule (1) destiné à établir un contact électriquement conducteur avec une pluralité de bornes de cellule de batterie (2), le connecteur de cellule (1) possédant plusieurs portions (5, 6, 7) juxtaposées et un premier nombre de premières portions (5, 6) étant constitué d'un matériau métallique électriquement conducteur, un deuxième nombre de deuxièmes portions (7) étant constitué d'une matière plastique électriquement isolante, au moins une deuxième portion (7) étant respectivement disposée entre au moins deux premières portions (5, 6), **caractérisé en ce que** le connecteur de cellule (1) est réalisé à surface plane avec une section transversale sensiblement rectangulaire.

3. Connecteur de cellule (1) selon l'une des revendications précédentes, **caractérisé en ce qu'**au moins une première portion (5) est constituée d'un premier matériau métallique et au moins une première portion supplémentaire (6) est constituée d'un deuxième matériau métallique.

4. Connecteur de cellule (1) selon la revendication 3, **caractérisé en ce que** l'au moins une première portion (5) et l'au moins une première portion supplémentaire (6) sont reliées de manière électriquement conductrice au moyen d'un procédé d'assemblage par interpénétration.

5. Procédé de fabrication d'un connecteur de cellule (1) qui possède une ou plusieurs portions (5, 6, 7) juxtaposées, un premier nombre de premières portions (5, 6) étant constitué d'un matériau métallique électriquement conducteur, **caractérisé en ce qu'**entre au moins deux premières portions (5, 6) est disposée au moins une deuxième portion (7) constituée d'une matière plastique électriquement isolante, l'au moins une deuxième portion (7) étant respectivement reliée aux au moins deux premières portions (5, 6) au moyen d'un procédé de nanomoulage.

6. Procédé selon la revendication 5, **caractérisé en ce qu'**au moins une première portion (5) est constituée d'un premier matériau métallique électriquement conducteur et au moins une première portion supplémentaire (6) est constituée d'un deuxième matériau métallique électriquement conducteur, l'au moins une première portion (5) étant reliée à l'au moins une première portion supplémentaire (6) au moyen d'un procédé d'assemblage par interpénétration.

7. Module de batterie (4) comprenant une pluralité de cellules de batterie (3) interconnectées électriquement les unes aux autres, les cellules de batterie (3) possédant respectivement une borne de cellule (2) reliée de manière électriquement conductrice avec une électrode de la cellule de, batterie (3) en vue de mettre les cellules de batterie (3) en contact électriquement conducteur, et au moins un premier nombre de bornes de cellule (2) étant reliées au moyen d'un connecteur de cellule (1), **caractérisé en ce qu'**au moins le premier nombre de bornes de cellule (2) sont reliées au moyen d'un connecteur de cellule (1) selon l'une des revendications 1 à 4, de sorte que les cellules de batterie (3) sont interconnectées électriquement les unes aux autres au moins partiellement au moyen du connecteur de cellule (1).

8. Module de batterie (4) selon la revendication 8, **caractérisé en ce que** les cellules de batterie (3) possèdent respectivement une première borne de cellule (2) et une deuxième borne de cellule (2), les cellules de batterie (3) étant disposées les unes à côté des autres de manière à former deux rangées de bornes de cellule s'étendant parallèlement l'une à l'autre, la première rangée de bornes de cellule étant reliée à un premier connecteur de cellule (1) selon l'une des revendications 1 à 5 et la deuxième rangée de bornes de cellule étant reliée à un deuxième connecteur de cellule (1) selon l'une des revendications 1 à 4, de sorte que les cellules de batterie sont interconnectées électriquement les unes aux autres au moyen du connecteur de cellule.
